# FASCICULE DE BREVET EUROPEEN

(11) **EP 4 073 684 B1**
(45) Date de publication et mention de la délivrance du brevet: **10.12.2025**
(21) Numéro de dépôt: 20820998.1
(22) Date de dépôt: 11.12.2020
(51) Int. Cl.: A63F 3/06, G06V 10/141, G06V 30/40, G06V 30/412, A63F 9/24

(54) **PROCÉDÉ, DISPOSITIF ET PRODUIT PROGRAMME D'ORDINATEUR DE DÉCODAGE D'UN BULLETIN DE JEU**
VERFAHREN, VORRICHTUNG UND COMPUTERPROGRAMMPRODUKT ZUM DECODIEREN EINES SPIELSCHEINS
METHOD, DEVICE AND COMPUTER PROGRAM PRODUCT FOR DECODING A GAME TICKET

(30) Priorité: 11.12.2019 FR 1914173
(43) Date de publication de la demande: 19.10.2022
(73) Titulaire: Carrus Gaming, 75010 Paris (FR)
(72) Inventeur: ROSTAING, Laurent, 75010 PARIS (FR); LE GOUIL, Elise, 75010 PARIS (FR); CODREANU, Catalin, 75010 PARIS (FR)
(74) Mandataire: Fidal Innovation
(86) Numéro de dépôt international: PCT/EP2020/085793
(87) Numéro de publication internationale: WO 2021/116427

(56) Documents cités:
- EP-A1- 3 382 605

## Description

### DOMAINE DE L'INVENTION

La présente invention concerne le domaine du décodage d'un bulletin de jeu. Plus particulièrement elle concerne le domaine des dispositifs de décodage utilisant un dispositif d'éclairage permettant d'acquérir deux images d'un bulletin de jeu, une image avec l'éclairage allumé et l'autre image avec l'éclairage éteint.

### ETAT DE LA TECHNIQUE

Un bulletin de jeu est généralement un support papier, comportant des indications et un ensemble de zones à remplir, par exemple des cases à cocher, permettant à l'utilisateur d'indiquer des éléments qu'il désire jouer.

Un bulletin de jeu est habituellement décodé afin de déterminer le type de bulletin de jeu utilisé par l'utilisateur ainsi que les cases qui ont été cochées par l'utilisateur.

Il est connu des dispositifs d'analyse de documents qui se basent sur un traitement de deux images préalablement acquises selon des conditions d'illumination différentes, comme par exemple décrit dans EP 3 382 605.

Il est connu des dispositifs de décodage de bulletins de jeux qui se basent sur la différence entre deux images d'un même bulletin de jeu. En particulier, une des images du bulletin de jeu est prise avec l'éclairage allumé, l'autre image du bulletin de jeu est prise avec l'éclairage éteint. La différence entre les deux images (obtenue par l'opération de soustraction) permet d'offrir un décodage plus performant. On peut par exemple citer la demande de brevet Français FR3027136, les pages 240 et 241 du livre de A. Jain "Fundamentals of Digital Image Processing", publié par Prentice Hall en 1989 et les pages 185 à 187 du livre R. Gonzales et R. Woods « Digital Image Processing », publié par Addison Wesley en 1992.

Un problème avec l'utilisation de la soustraction des images est qu'il nécessite d'acquérir une image avec et sans éclairage ce qui impacte le laps de temps nécessaire au décodage des bulletins de jeux. En effet un délai de 300ms est en général nécessaire pour effectuer les acquisitions des deux images du bulletin de jeux, éclairage allumé puis éclairage éteint. Ainsi ces dispositifs présentent un laps de temps nécessaire au décodage (généralement de 300ms) incompressible, car dédié aux acquisitions, et qui n'est pas utilisé pour le décodage du bulletin de jeu en tant que tel.

Il est aussi connu des dispositifs n'utilisant qu'une image, généralement obtenue avec l'éclairage allumé. Cependant l'utilisation d'une seule image offre un décodage moins performant, en particulier dans le cas de variations de la lumière ambiante.

### EXPOSE DE L'INVENTION

L'invention permet de pallier les inconvénients précités.

A cet effet, l'invention se place dans le contexte du décodage d'un bulletin de jeu utilisant deux images différentes obtenues dans des conditions d'éclairages différents et pouvant réaliser une partie du décodage durant le laps de temps séparant l'acquisition des deux images.

Selon un premier aspect, l'invention concerne un procédé de décodage d'un bulletin de jeu au moyen d'un dispositif de décodage. Le dispositif comprend un dispositif d'éclairage du bulletin de jeu et un dispositif d'acquisition d'image du bulletin de jeu. Le décodage comprend une pluralité de traitements. Le procédé comprend les étapes suivantes, mises en œuvre par une unité de traitement du dispositif de décodage :
- acquisition d'une première image du bulletin de jeu lorsque le dispositif d'éclairage est allumé et ;
- acquisition d'une deuxième image du bulletin de jeu lorsque le dispositif d'éclairage est éteint et ;
- décodage principal du bulletin de jeu, réalisant au moins une partie de la pluralité des traitements à partir d'une soustraction de la première image et de la deuxième image,

Dans lequel l'étape de décodage anticipé du bulletin de jeu est configurée pour localiser le bulletin de jeu et déterminer le type du bulletin de jeu, à partir de la première image et
l'étape de décodage principal du bulletin de jeu est configurée pour déterminer l'état de la case localisée, à partir de la soustraction de la première image et de la deuxième image et du résultat de l'étape de décodage anticipé réalisé à partir de la première image, la localisation de ladite au moins une case du bulletin de jeu étant effectuée durant l'étape de décodage anticipé ou durant l'étape de décodage principal ou par une combinaison desdites deux étapes de décodage anticipé et de décodage principal.

Le procédé comprend en outre une étape de décodage anticipé du bulletin de jeu, réalisant au moins une autre partie de la pluralité des traitements à partir de la première image. L'étape de décodage anticipé est réalisée entre l'étape d'acquisition de la première image et l'étape d'acquisition de la deuxième image.

L'invention selon ce premier aspect permet d'avoir un décodage plus rapide. Ce décodage plus rapide est obtenu par la réalisation d'une partie du décodage dans le laps de temps séparant l'acquisition de l'image avec l'éclairage allumé et l'acquisition de l'image avec l'éclairage éteint.

Selon un mode de réalisation, le procédé de décodage d'un bulletin de jeu comprend en outre une étape de restitution du décodage du bulletin de jeu.

Selon un mode de réalisation, la pluralité des traitements comprend une localisation du bulletin de jeu, une détermination d'un type du bulletin de jeu, une localisation d'au moins une case du bulletin de jeu, une détermination d'un état de la case localisée et l'étape de décodage anticipé du bulletin de jeu est configurée pour localiser le bulletin de jeu et déterminer le type du bulletin de jeu, à partir de la première image et l'étape de décodage principal du bulletin de jeu est configurée pour déterminer l'état de la case localisée, à partir de la soustraction.

Selon un mode de réalisation, la pluralité des traitements comprend une localisation du bulletin de jeu, une détermination d'un type du bulletin de jeu, une localisation d'au moins une case, une détermination d'un état de la case localisée et l'étape de décodage anticipé du bulletin de jeu est configurée pour localiser le bulletin de jeu et déterminer le type du bulletin de jeu à partir de la première image et/ou l'étape de décodage anticipé du bulletin de jeu est configurée pour localiser la case du bulletin de jeu à partir de la première image, l'étape de décodage principal du bulletin de jeu est configurée pour déterminer l'état de la case localisée, à partir de la soustraction.

Selon un mode de réalisation, la pluralité des traitements comprend une localisation du bulletin de jeu, une détermination d'un type du bulletin de jeu et/ou une localisation d'au moins une case, une détermination d'un état de la case localisée et l'étape de décodage anticipé du bulletin de jeu est configurée pour localiser le bulletin de jeu et déterminer le type du bulletin de jeu à partir de la première image, l'étape de décodage principal du bulletin de jeu est configurée pour localiser la case du bulletin de jeu à partir de la soustraction, l'étape de décodage principal du bulletin de jeu est configurée pour déterminer l'état de la case localisée, à partir de la soustraction.

Selon un mode de réalisation, la pluralité des traitements comprend une localisation du bulletin de jeu, une détermination d'un type du bulletin de jeu, une localisation d'au moins une case et/ou une détermination d'un état de la case localisée et l'étape de décodage anticipé du bulletin de jeu est configurée pour localiser le bulletin de jeu et déterminer le type du bulletin de jeu à partir de la première image, l'étape de décodage anticipé du bulletin de jeu est configurée pour localiser la case du bulletin de jeu à partir de la première image et/ou l'étape de décodage principal du bulletin de jeu est configurée pour estimer une qualité de la localisation de la case, et si cette estimation est inférieure à un seuil prédéterminé, déterminer de nouveau la localisation de la case, l'étape de décodage principal du bulletin de jeu est configurée pour déterminer l'état de la case localisée, à partir de la soustraction.

Selon un autre aspect, l'invention concerne un dispositif de décodage d'un bulletin de jeu. Le décodage comprend une pluralité de traitements. Le dispositif de décodage comprend un dispositif d'acquisition d'image et un dispositif d'éclairage du bulletin de jeu et une unité de traitement configurée pour la réalisation des étapes suivantes :
- acquisition d'une première image du bulletin de jeu lorsque le dispositif d'éclairage est allumé et ;
- acquisition d'une deuxième image du bulletin de jeu lorsque le dispositif d'éclairage est éteint et ;
- décodage principal du bulletin de jeu, réalisant une partie de la pluralité des traitements à partir d'une soustraction de la première image et de la deuxième image.

Le procédé comprend en outre une étape de décodage anticipé du bulletin de jeu, réalisant l'autre partie de la pluralité des traitements à partir de la première image. L'étape de décodage anticipé est réalisée entre l'étape d'acquisition de la première image et l'étape d'acquisition de la deuxième image,
et dans lequel :
l'étape de décodage anticipé du bulletin de jeu est configurée pour localiser le bulletin de jeu et déterminer le type du bulletin de jeu, à partir de la première image et
l'étape de décodage principal du bulletin de jeu est configurée pour déterminer l'état de la case localisée, à partir de la soustraction de la première image et de la deuxième image et du résultat de l'étape de décodage anticipé réalisé sur la première image,
la localisation de ladite au moins une case du bulletin de jeu étant effectuée durant l'étape de décodage anticipé ou durant l'étape de décodage principal ou par une combinaison des deux étapes.

Selon un mode de réalisation le dispositif de décodage d'un bulletin de jeu comporte en outre un dispositif apte à restituer le décodage du bulletin de jeu. L'unité de traitement est en outre configurée pour réaliser une étape de restitution du décodage du bulletin de jeu.

Selon un mode de réalisation du dispositif de décodage d'un bulletin de jeu, la pluralité des traitements comprenant une localisation du bulletin de jeu et/ou une détermination d'un type du bulletin de jeu, une localisation d'au moins une case, une détermination d'un état de la case localisée et l'étape de décodage anticipé du bulletin de jeu est configurée pour localiser le bulletin de jeu et déterminer le type du bulletin de jeu, à partir de la première image, l'étape de décodage principal du bulletin de jeu est configurée pour déterminer l'état de la case localisée, à partir de la soustraction.

Selon un mode de réalisation du dispositif de décodage d'un bulletin de jeu, la pluralité des traitements comprend une localisation du bulletin de jeu, une détermination d'un type du bulletin de jeu, une localisation d'au moins une case, une détermination d'un état de la case localisée et l'étape de décodage anticipé du bulletin de jeu est configurée pour localiser le bulletin de jeu et déterminer le type du bulletin de jeu à partir de la première image, l'étape de décodage anticipé du bulletin de jeu est configurée pour localiser la case du bulletin de jeu à partir de la première image, l'étape de décodage principal du bulletin de jeu est configurée pour déterminer l'état de la case localisée, à partir de la soustraction.

Selon un mode de réalisation du dispositif de décodage d'un bulletin de jeu, la pluralité des traitements comprend une localisation du bulletin de jeu, une détermination d'un type du bulletin de jeu, une localisation d'au moins une case, une détermination d'un état de la case localisée et l'étape de décodage anticipé du bulletin de jeu est configurée pour localiser le bulletin de jeu et déterminer le type du bulletin de jeu à partir de la première image, l'étape de décodage principal du bulletin de jeu est configurée pour localiser la case du bulletin de jeu à partir de la soustraction, l'étape de décodage principal du bulletin de jeu est configurée pour déterminer l'état de la case localisée, à partir de la soustraction.

Selon un mode de réalisation du dispositif de décodage d'un bulletin de jeu, la pluralité des traitements comprend une localisation du bulletin de jeu, une détermination d'un type du bulletin de jeu et/ou une localisation d'au moins une case, une détermination d'un état de la case localisée et l'étape de décodage anticipé du bulletin de jeu est configurée pour localiser le bulletin de jeu et déterminer le type du bulletin de jeu à partir de la première image, l'étape de décodage anticipé du bulletin de jeu est configurée pour localiser la case du bulletin de jeu à partir de la première image, l'étape de décodage principal du bulletin de jeu est configurée pour estimer une qualité de la localisation de la case, et si cette estimation est inférieure à un seuil prédéterminé, l'étape de
décodage principal du bulletin de jeu est configurée pour déterminer l'état de la case localisée, à partir de la soustraction.

Selon un autre aspect, l'invention concerne un produit programme d'ordinateur. Ce produit programme d'ordinateur comprenant des instructions de code de programme pour l'exécution des étapes d'un procédé de décodage d'un bulletin de jeu selon l'invention lorsque ce procédé est exécuté par un processeur. Le décodage comprend notamment une pluralité de traitements. Ce procédé de décodage d'un bulletin de jeu comprend une étape d'acquisition d'une première image du bulletin de jeu lorsque le dispositif d'éclairage est allumé et une étape d'acquisition d'une deuxième image du bulletin de jeu lorsque le dispositif d'éclairage est éteint et une étape de décodage principal du bulletin de jeu, réalisant une partie de la pluralité des traitements à partir d'une soustraction de la première image et de la deuxième image. Le procédé comprend en outre une étape de décodage anticipée du bulletin de jeu, réalisant l'autre partie de la pluralité des traitements à partir de la première image, l'étape de décodage anticipée étant réalisée entre l'étape d'acquisition de la première image et l'étape d'acquisition de la deuxième image.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1]

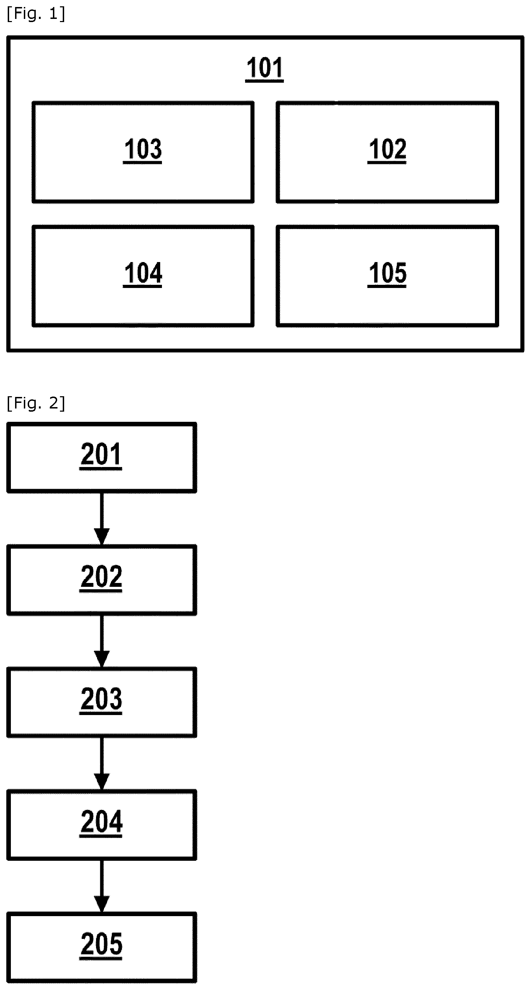

   La figure 1 illustre de façon schématique le dispositif mis en œuvre dans l'invention.
[Fig. 2]
   La figure 2 illustre un procédé de décodage conforme à la présente invention.
[Fig. 3]

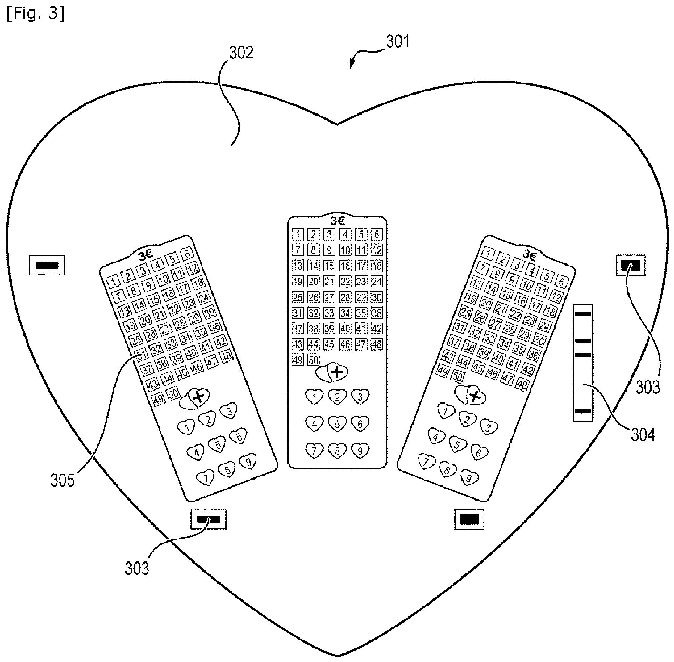

   La figure 3 illustre un bulletin de jeu utilisé dans la présente invention.
[Fig. 4-a]
   [Fig. 4-b]

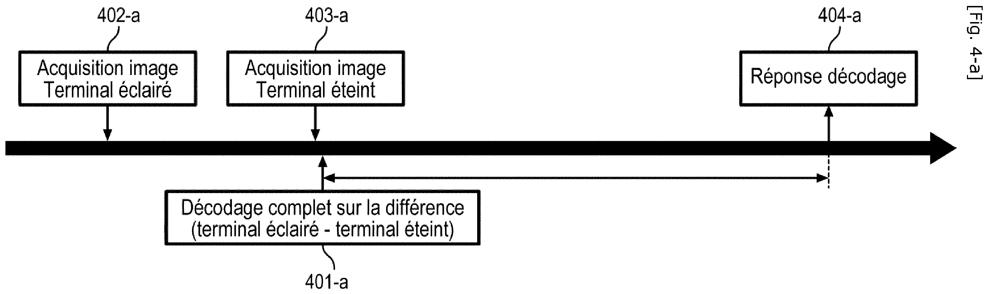

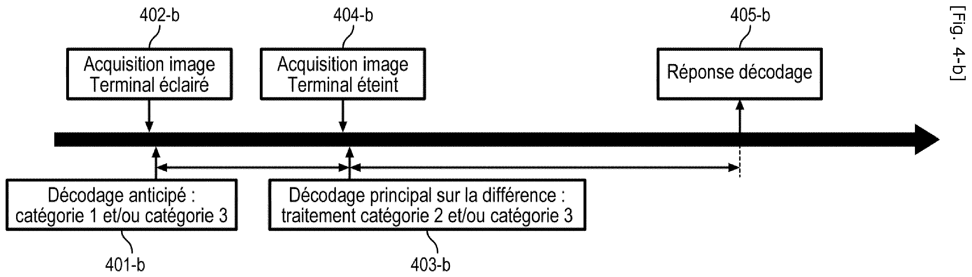

   Les figures 4-a et 4-b illustrent le gain de traitement apporté par le procédé de décodage d'un bulletin de jeu conforme à la présente invention.

### DESCRIPTION DETAILLEE DE L'INVENTION

En référence à la figure 1, un dispositif 101 apte à décoder un bulletin de jeu comprend un dispositif d'acquisition d'image 102, un dispositif d'éclairage du bulletin de jeu 103 et une unité de traitement 104.

Le dispositif 102 d'acquisition d'images est apte à acquérir des images du bulletin de jeu. Ce dispositif 102 peut par exemple être une caméra ou un appareil photo. Le dispositif d'éclairage 103 est piloté par l'unité de traitement 104. Ce dispositif d'éclairage 103 est intermittent dans le sens où il peut être allumé ou éteint.

L'unité de traitement 104 comprend au moins un processeur et au moins une mémoire dans laquelle est stocké un programme d'ordinateur mis en œuvre par le processeur. Ce programme d'ordinateur comprend des instructions de code de programme configurées pour mettre en œuvre un procédé de décodage d'un bulletin de jeu qui sera décrit ci-après en relation avec la figure 2.

Le dispositif 101 de décodage d'un bulletin de jeu, peut aussi comprendre un dispositif 105 apte à restituer le décodage du bulletin de jeu, en particulier un type du bulletin de jeu, et un état d'une case du bulletin de jeu. Ce dispositif peut par exemple être un écran apte à afficher ce décodage. De manière avantageuse le dispositif restitue un identifiant unique relatif au type de bulletin de jeu décodé et un ensemble d'identifiants uniques des cases cochés au sein de ce type de bulletin. L'ensemble des identifiants est connu à priori, et a été défini au moment de l'enrôlement du bulletin. L'étape d'enrôlement du bulletin est une étape préalable, réalisée une fois pour toutes pour l'ensemble des dispositifs de décodage du bulletin de jeu pour le jeu en question, au cours de laquelle on définit, pour ce jeu, un modèle de bulletin comprenant un identifiant unique pour ce type de bulletin de jeu, ainsi qu'un identifiant unique associé à chaque case localisée pour le modèle.

Une case peut généralement avoir deux états ; cochée ou non cochée.

Le décodage d'un bulletin de jeu comprend les traitements suivants :
- La reconnaissance du bulletin en particulier la détermination de la localisation du bulletin et du type de bulletin et
- La localisation des cases et
- La détermination de l'état des cases (cochée ou non cochée).

En référence à la figure 2, le procédé de décodage d'un bulletin de jeu comporte :
- une étape 201 d'acquisition d'une première image du bulletin de jeu lorsque le dispositif d'éclairage 103 est allumé et;
- une étape 202 de décodage anticipé du bulletin de jeu, réalisant une partie de la pluralité des traitements à partir de la première image et ;
- une étape 203 d'acquisition d'une deuxième image du bulletin de jeu lorsque le dispositif d'éclairage 103 est éteint et ;
- une étape 204 de décodage principal du bulletin de jeu, réalisant l'autre partie de la pluralité des traitements à partir d'une soustraction de la première image et de la deuxième image.

L'étape 203 d'acquisition peut en particulier avoir lieu tout dispositif d'éclairage du dispositif 101 éteint, le bulletin de jeu étant alors éclairé exclusivement par de l'éclairage ambiant.

Le procédé peut aussi comprendre une étape 205 de restitution du décodage du bulletin de jeu, en particulier un type du bulletin de jeu, et un état d'une case du bulletin de jeu. De manière avantageuse le dispositif durant l'étape 205 de restitution restitue un identifiant unique relatif au type de bulletin de jeu décodé et un ensemble d'identifiants uniques des cases cochés au sein de ce type de bulletin. L'ensemble des identifiants est connu à priori, et a été défini au moment de l'enrôlement du bulletin.

Sur la figure 3, un exemple de bulletin de jeu 301 est représenté. Ce bulletin de jeu comporte des éléments de décors 302. Ce bulletin comporte aussi des éléments 303 permettant la localisation du bulletin de jeu. Ces éléments 303, permettant la localisation du bulletin de jeu, prennent généralement la forme de pavés de positionnement comme représentés sur la figure 3. Ce bulletin comporte des éléments 304 d'identification du bulletin de jeu qui peuvent prendre la forme d'un code jeu comme représenté sur la figure 3. Enfin le bulletin comporte une pluralité de cases 305. On entend par case un motif possédant un contour fermé quelconque, délimitant un espace destiné à être rempli par un utilisateur. Un tel contour peut être repéré par un trait ou par une différence de teinte entre le fond de la case et le reste du bulletin. Dans l'exemple illustré en figure 3, certaines cases possèdent un contour fermé carré et d'autres cases possèdent un contour fermé en forme de cœur. Ces cases peuvent également posséder un contenu tel qu'un chiffre comme illustré en figure 3.

La localisation du bulletin de jeu se base sur la détection, dans l'une des images, des pavés de positionnement. Cette détection peut utiliser un algorithme de reconnaissance de forme qui sera paramétré avec les formes des pavés de positionnement et les positions relatives de ces pavés de positionnement. Cette détection peut aussi être réalisée par un procédé de seuillage automatique d'image, segmentation en composantes connexes et filtrages des composantes qui n'ont pas des propriétés relatives aux formes des pavés recherchés (rectangles compacts par exemple). De plus les pavés extraits peuvent après être mis en correspondance avec les pavés de référence de chaque bulletin pour déduire des candidats de localisation pour chaque type de bulletin.

La détermination du type du bulletin de jeu se base sur la reconnaissance des éléments 304 d'identification du bulletin de jeu. La localisation de ces éléments 304 d'identification du bulletin de jeu, relativement à la localisation des pavés de positionnement préalablement détectés, est généralement connue. De manière avantageuse la détermination du type de bulletin se fait par un décodage du code jeux qui peut être par exemple de type code barre 1D (alignement de barres épaisses 1D, voir par exemple la figure 3). La position du code barre et de ses éléments par rapport aux pavés de positionnement sont connus à priori.

La localisation des cases utilise généralement un algorithme de segmentation d'image et se base sur les pavés de positionnement, et le type de bulletin de jeu. Cette localisation des cases peut être réalisée en deux phases, dans une première phase les cases sont localisées de manière grossière, puis dans une deuxième phase les cases sont localisées de manière fine. Ainsi on peut réaliser un procédé en deux étapes pour accélérer le traitement par rapport à une localisation fine seule. La demande de brevet FR3027136 propose par exemple de détecter des cases potentielles via une segmentation d'images, et ensuite de résoudre conjointement la localisation et identification de chacune des cases du bulletin (recalage de la grille de cases du bulletin de référence).

La détermination de l'état des cases (cochée ou non cochée) est réalisée par un procédé de traitement d'image. Avantageusement il est possible de réaliser un procédé de seuillage de niveaux d'intensités, segmentation en composantes connexes, filtrages (avec l'aire des composantes) et finalement décision de l'état de la case en fonction de la somme des aires des composantes seuillées et la comparaison de cette somme et d'un seuil.

Il est aussi avantageux d'utiliser la détection de crêtes, d'épaisseurs et de contours de cases pour en dériver un squelette. Les valeurs d'épaisseurs à détecter sont connues a priori car le type de document et sa pose ont été calculés. Ainsi, des filtres de traitement d'images de type passe bandes peuvent être utilisés, par exemple un Laplacien de gaussien ou une différence de gaussienne. Il est aussi avantageux d'utiliser des algorithmes d'apprentissage profond, un algorithme de détection adaptés pour des cases peut être dérivé d'un détecteur générique d'objets de type YOLO / SSD. Ces algorithmes sont décrits pour YOLO dans l'article suivant REDMON, Joseph et FARHADI, Ali. Yolov3: « An incremental improvement. arXiv preprint » arXiv:1804.02767, 2018 et pour SSD dans l'articule suivant LIU, Wei, ANGUELOV, Dragomir, ERHAN, Dumitru, et al. « Ssd: Single shot multibox detector" dans : European conference on computer vision. Springer, Cham, 2016. p. 21-37.

Grâce à ce procédé, le dispositif de décodage d'un bulletin de jeu peut réaliser un décodage anticipé de ce bulletin de jeu, préalablement à l'acquisition de la deuxième image (obtenue avec l'éclairage éteint). Ainsi le laps de temps entre les deux prises d'images est utilisé pour réaliser une partie du décodage, et ainsi accélérer la vitesse de décodage du dispositif. Le dispositif implémente donc certains traitements du décodage du bulletin de jeu durant l'étape de décodage anticipé et certains traitements du décodage du bulletin de jeu durant l'étape de décodage principal du bulletin de jeu.

Les traitements compris dans le décodage d'un bulletin de jeu, peuvent être classés en trois catégories, selon l'étape de décodage principal ou de décodage anticipé durant laquelle ils sont réalisés de manière avantageuse :
- La reconnaissance du bulletin, en particulier sa localisation et la détermination du type de bulletin, est réalisée de manière avantageuse durant l'étape 202 de décodage anticipé. Les traitements réalisés durant l'étape 202 de décodage anticipé sont ceux qui peuvent être réalisés sans attendre d'avoir à disposition l'ensemble de deux images (avec et sans éclairage). Ce sont en particulier des traitements qui sont robustes aux déformations géométriques de type pliage et froissage, ainsi qu'aux perturbations lumineuses liées à l'éclairage ambiant, ou encore à l'empilement de bulletins. La reconnaissance du bulletin est robuste à ce type de déformations géométriques (par conservation de la géométrie du problème, et d'une majeure partie des éléments caractéristiques de chaque bulletin). Il est donc possible de réaliser cette reconnaissance uniquement sur la première image et ainsi anticiper les traitements relatifs à cette reconnaissance, ceci tout en gardant une bonne robustesse aux perturbations extérieures du procédé de décodage global. Ceci permet ainsi un gain de traitement qui dépend du laps de temps entre l'acquisition de la première image et de la deuxième image.
- La localisation de la case peut être réalisée durant l'étape 202 de décodage anticipé ou l'étape 204 de décodage principal. Le choix de l'une ou l'autre étape dépend principalement du laps de temps entre l'acquisition de l'image avec l'éclairage et l'acquisition de l'image sans éclairage. Dans le cas où la localisation de la case est réalisée en deux phases, il est avantageux de réaliser la localisation grossière durant l'étape 202 de décodage anticipé et la localisation fine durant l'étape 204 de décodage principal.
- La détermination de l'état de la case (cochée/non cochée) est réalisée de manière avantageuse durant l'étape 204 de décodage principal. En effet cette détermination de l'état de la case utilise avantageusement les deux images et en particulier la soustraction de ces deux images. En effet, l'image soustraite comporte généralement moins de perturbations lumineuses (par exemple des ombres, éclairage ambiant, distorsion colorimétriques), améliorant ainsi la performance de détermination de l'état des cases.

Ainsi, selon les modes de réalisation, l'étape de décodage principal peut utiliser une image issue de l'application de l'étape de décodage anticipé à la première image, ou la première image issue de la première acquisition.

Ainsi en utilisant une telle répartition du décodage entre l'étape de décodage anticipé et l'étape de décodage principal, ce dispositif et ce procédé permettent d'obtenir une bonne robustesse aux perturbations lumineuses et aux perturbations du bulletin de jeu (par exemple les pliures, les ratures ou les bulletins froissés), tout en optimisant le temps de décodage.

Ainsi donc l'apport du procédé est un gain de temps de réponse du dispositif tout en réduisant le risque de perte en performances de décodage de bulletin par rapport au procédé usuel de décodage sur l'image soustraite. Il a été estimé sur un terminal prototype gx424 SMILE un gain de 150 ms parmi les ~ 300 ms de laps de temps entre les deux acquisitions d'images.

Les figures 4-a et 4-b permettent d'illustrer le gain de traitement apporté par le procédé de décodage d'un bulletin de jeu, tel que décrit précédemment.

Sur la figure 4-a l'ensemble du décodage 401-a est réalisé suite à l'acquisition des deux images (402-a et 403-a), ce qui retarde le début du décodage et donc la restitution 404-a du décodage. Sur la figure 4-b, une partie du décodage 401-b est réalisée suite à l'acquisition 402-b de la première image et l'autre partie du décodage 403-b est réalisée suite à l'acquisition 404-b de la deuxième image, ce qui permet d'optimiser le temps de traitement et donc d'obtenir une restitution 405-b du décodage plus rapide.

De manière avantageuse, l'étape 204 de décodage principal peut être configurée pour déterminer une qualité du décodage réalisé par l'étape 202 de décodage anticipé, et si la qualité du décodage est inférieure à un seuil prédéterminé, l'étape 204 de décodage principal peut être configurée pour réaliser de nouveau le décodage réalisé durant l'étape 202 de décodage anticipé à partir de la soustraction de la première et de la deuxième image. En particulier l'étape 204 de décodage principal peut-être configurée pour déterminer de nouveau une localisation d'une case.

La détermination de la qualité du décodage réalisé par l'étape 202 de décodage anticipé est réalisée sur la base de la qualité de la deuxième image. En particulier, sur les perturbations lumineuses présente dans cette deuxième image. Il est par exemple possible de réaliser un seuillage automatique des pixels et ensuite de déterminer un ratio de pixels seuilles qui sera comparé à un seuil prédéterminé. On peut par exemple détecter que le signal dans l'image acquise terminal éteint est faible. Les intensités lumineuses des pixels sont en effet faibles en cas de perturbations extérieures mineures. Un procédé de seuillage d'image peut être utilisé et le ratio de pixels seuillés sur pixels totaux peut être comparé à un seuil prédéterminé.

## Revendications

1. Procédé de décodage d'un bulletin de jeu, au moyen d'un dispositif de décodage (101), ledit dispositif (101) comprenant un dispositif d'éclairage (103) du bulletin de jeu et un dispositif d'acquisition d'image (102) du bulletin de jeu, le décodage comprenant une pluralité de traitements,
la pluralité des traitements comprenant une localisation du bulletin de jeu et une détermination d'un type du bulletin de jeu et une localisation d'au moins une case du bulletin de jeu et une détermination d'un état de la case localisée
le procédé comprenant les étapes suivantes, mises en œuvre par une unité de traitement (104) du dispositif (101) de décodage :
- acquisition (201) d'une première image du bulletin de jeu lorsque le dispositif d'éclairage (103) est allumé et ;
- acquisition (203) d'une deuxième image du bulletin de jeu lorsque le dispositif d'éclairage (103) est éteint et ;
- décodage (204) principal du bulletin de jeu, réalisant au moins une partie de la pluralité des traitements à partir d'une soustraction de la première image et de la deuxième image ;
le procédé étant **caractérisé en ce qu'**il comprend en outre une étape de décodage anticipé (202) du bulletin de jeu, réalisant à partir de la première image au moins une autre partie de la pluralité des traitements, ladite étape de décodage anticipé (202) étant réalisée entre l'étape d'acquisition (201) de la première image et l'étape d'acquisition (203) de la deuxième image,
et dans lequel :
l'étape (202) de décodage anticipé du bulletin de jeu est configurée pour localiser le bulletin de jeu et déterminer le type du bulletin de jeu, à partir de la première image et
l'étape (204) de décodage principal du bulletin de jeu est configurée pour déterminer l'état de la case localisée, à partir de la soustraction de la première image et de la deuxième image et du résultat de l'étape de décodage anticipé (202) réalisé à partir de la première image, la localisation de ladite au moins une case du bulletin de jeu étant effectuée durant l'étape de décodage anticipé (202) ou durant l'étape de décodage principal (204) ou par une combinaison desdites deux étapes de décodage anticipé (202) et de décodage principal (204).

2. Procédé de décodage d'un bulletin de jeu selon la revendication 1 comprenant en outre une étape (205) de restitution du décodage du bulletin de jeu.

3. Procédé de décodage d'un bulletin de jeu selon la revendication 1 ou 2, dans lequel :
l'étape (202) de décodage anticipé du bulletin de jeu est configurée pour localiser la case du bulletin de jeu, à partir de la première image.

4. Procédé de décodage d'un bulletin de jeu selon la revendication 1 ou 2, dans lequel :
l'étape (204) de décodage principal du bulletin de jeu est configurée pour localiser la case du bulletin de jeu, à partir de la soustraction.

5. Procédé de décodage d'un bulletin de jeu selon la revendication 1 ou 2, dans lequel :
l'étape (202) de décodage anticipé du bulletin de jeu est configurée pour localiser la case du bulletin de jeu, à partir de la première image et
l'étape (204) de décodage principal du bulletin de jeu est configurée pour estimer une qualité de la localisation de la case, et si cette estimation est inférieure à un seuil prédéterminé déterminer une nouvelle localisation de la case.

6. Dispositif (101) de décodage d'un bulletin de jeu, le décodage comprenant une pluralité de traitements,
la pluralité des traitements comprenant une localisation du bulletin de jeu et une détermination d'un type du bulletin de jeu et une localisation d'au moins une case et une détermination d'un état de la case localisée
le dispositif comprenant
- un dispositif d'acquisition d'image (102) et
- un dispositif d'éclairage du bulletin de jeu (103) et
- une unité de traitement (104) configurée pour la réalisation des étapes suivantes :
- acquisition (201) d'une première image du bulletin de jeu lorsque le dispositif d'éclairage (103) est allumé et ;
- acquisition (203) d'une deuxième image du bulletin de jeu lorsque le dispositif d'éclairage (103) est éteint et ;
- décodage (204) principal du bulletin de jeu, réalisant une partie de la pluralité des traitements à partir d'une soustraction de la première image et de la deuxième image ;
le dispositif étant **caractérisé en ce que** l'unité de traitement (104) est en outre configurée pour la réalisation d'une étape de décodage anticipé (202) du bulletin de jeu, réalisant l'autre partie de la pluralité des traitements à partir de la première image, l'étape de décodage anticipé (202) étant réalisée entre l'étape d'acquisition (201) de la première image et l'étape d'acquisition (203) de la deuxième image, et dans lequel :
l'étape (202) de décodage anticipé du bulletin de jeu est configurée pour localiser le bulletin de jeu et déterminer le type du bulletin de jeu, à partir de la première image et
l'étape (204) de décodage principal du bulletin de jeu est configurée pour déterminer l'état de la case localisée, à partir de la soustraction de la première image et de la deuxième image et du résultat de l'étape de décodage anticipé (202) réalisé sur la première image,
la localisation de ladite au moins une case du bulletin de jeu étant effectuée durant l'étape de décodage anticipé (202) ou durant l'étape de décodage principal (204) ou par une combinaison desdites deux étapes,.

7. Dispositif (101) de décodage d'un bulletin de jeu selon la revendication 6 comprenant en outre un dispositif (105) apte à restituer le décodage du bulletin de jeu, l'unité de traitement étant en outre configurée pour réaliser une étape (205) de restitution du décodage du bulletin de jeu.

8. Dispositif (101) de décodage d'un bulletin de jeu selon la revendication 6 ou 7, dans lequel :
l'étape (202) de décodage anticipé du bulletin de jeu est configurée pour localiser la case du bulletin de jeu, à partir de la première image.

9. Dispositif (101) de décodage d'un bulletin de jeu selon la revendication 6 ou 7, dans lequel :
l'étape (204) de décodage principal du bulletin de jeu est configurée pour localiser la case du bulletin de jeu, à partir de la soustraction.

10. Dispositif (101) de décodage d'un bulletin de jeu selon la revendication 6 ou 7, dans lequel :
l'étape (202) de décodage anticipé du bulletin de jeu est configurée pour localiser la case du bulletin de jeu, à partir de la première image et
l'étape (204) de décodage principal du bulletin de jeu est configurée pour estimer une qualité de la localisation de la case, et si cette estimation est inférieure à un seuil prédéterminé déterminer une nouvelle localisation de la case.

11. Produit programme d'ordinateur comprenant des instructions de code de programme pour l'exécution des étapes d'un procédé de décodage d'un bulletin de jeu selon l'une des revendications 1 à 5 lorsque ce procédé est exécuté par un processeur.

## Patentansprüche

1. Verfahren zur Dekodierung eines Spielscheins mittels einer Dekodiervorrichtung (101), wobei die genannte Vorrichtung (101) eine Beleuchtungsvorrichtung (103) für den Spielschein und eine Bildaufnahmevorrichtung (102) des Spielscheins umfasst, wobei die Dekodierung eine Vielzahl von Verarbeitungsschritten umfasst,
wobei die Vielzahl der Verarbeitungsschritte eine Lokalisierung des Spielscheins und eine Bestimmung eines Spielscheintyps und eine Lokalisierung von mindestens einem Feld des Spielscheins und eine Bestimmung eines Zustands des lokalisierten Feldes umfasst,
wobei das Verfahren die folgenden, von einer Verarbeitungseinheit (104) der Dekodiervorrichtung (101) durchgeführten Schritte umfasst:
- Erfassung (201) eines ersten Bildes des Spielscheins, wenn die Beleuchtungsvorrichtung (103) eingeschaltet ist und;
- Erfassung (203) eines zweiten Bildes des Spielscheins, wenn die Beleuchtungsvorrichtung (103) ausgeschaltet ist und;
Hauptdekodierung (204) des Spielscheins, wobei mindestens ein Teil der Vielzahl der Verarbeitungsschritte anhand einer Subtraktion des ersten Bildes und des zweiten Bildes ausgeführt wird;
wobei das Verfahren **dadurch gekennzeichnet ist, dass** es ferner einen Schritt der vorgezogenen Dekodierung (202) des Spielscheins umfasst, bei dem anhand des ersten Bildes mindestens ein weiterer Teil der Vielzahl der Verarbeitungsschritte durchführt wird, wobei der Schritt der vorgezogenen Dekodierung
(202) zwischen dem Schritt der Erfassung (201) des ersten Bildes und dem Schritt der Erfassung (203) des zweiten Bildes durchgeführt wird,
und in dem:
der Schritt (202) der vorgezogenen Dekodierung des Spielscheins so konfiguriert ist, dass anhand des ersten Bildes der Spielschein lokalisiert und der Spielscheintyp bestimmt wird, und
der Schritt (204) der Hauptdekodierung des Spielscheins so konfiguriert ist, dass der Zustand des lokalisierten Feldes bestimmt wird anhand der Subtraktion des ersten Bildes und des zweiten Bildes und des Ergebnisses des Schrittes der vorgezogenen Dekodierung (202), der anhand des ersten Bildes durchgeführt wurde, wobei die Lokalisierung des mindestens einen Feldes des Spielscheins während des Schrittes der vorgezogenen Dekodierung (202) oder während des Schrittes der Hauptdekodierung (204) oder durch eine Kombination der genannten beiden Schritte der vorgezogenen Dekodierung (202) und der Hauptdekodierung (204) durchgeführt wird.

2. Verfahren zur Dekodierung eines Spielscheins nach Anspruch 1, das ferner einen Schritt (205) zur Wiedergabe der Dekodierung des Spielscheins umfasst.

3. Verfahren zur Dekodierung eines Spielscheins nach Anspruch 1 oder 2, wobei:
der Schritt (202) der vorgezogenen Dekodierung des Spielscheins so konfiguriert ist, dass das Feld des Spielscheins auf der Grundlage des ersten Bildes lokalisiert wird.

4. Verfahren zur Dekodierung eines Spielscheins nach Anspruch 1 oder 2, wobei:
der Schritt (204) der Hauptdekodierung des Spielscheins so konfiguriert ist, dass er das Feld des Spielscheins anhand der Subtraktion lokalisiert.

5. Verfahren zur Dekodierung eines Spielscheins nach Anspruch 1 oder 2, wobei:
der Schritt (202) der vorgezogenen Dekodierung des Spielscheins so konfiguriert ist, dass er das Feld des Spielscheins aus dem ersten Bild lokalisiert, und
der Schritt (204) der Hauptdekodierung der Spielanzeige so konfiguriert ist, dass er die Qualität der Lokalisierung des Feldes ermittelt, und falls der ermittelte Wert unter einem vorgegebenen Schwellenwert liegt, eine neue Lokalisierung des Feldes bestimmt.

6. Vorrichtung (101) zur Dekodierung eines Spielscheins, wobei die Dekodierung eine Vielzahl von Verarbeitungsschritten umfasst,
wobei die Vielzahl der Verarbeitungsschritte eine Lokalisierung des Spielscheins und eine Bestimmung eines Spielscheintyps sowie eine Lokalisierung von mindestens einem Feld und eine Bestimmung des Zustands des lokalisierten Feldes umfasst,
wobei die Vorrichtung folgendes umfasst:
- eine Bilderfassungsvorrichtung (102) und
- eine Beleuchtungsvorrichtung des Spielscheins (103) und
- eine Verarbeitungseinheit (104), die so konfiguriert ist, dass die folgenden Schritte durchgeführt werden:
- Erfassung (201) eines ersten Bildes des Spielscheins, wenn die Beleuchtungsvorrichtung (103) eingeschaltet ist;
- Erfassung (203) eines zweiten Bildes des Spielscheins, wenn die Beleuchtungsvorrichtung (103) ausgeschaltet ist;
- die Hauptdekodierung (204) des Spielscheins, die einen Teil der Vielzahl der Verarbeitungsschritte anhand einer Subtraktion des ersten Bildes und des zweiten Bildes durchführt;
wobei die Vorrichtung **dadurch gekennzeichnet ist, dass** die Verarbeitungseinheit (104) ferner zur Durchführung eines Schrittes der vorgezogenen Dekodierung (202) des Spielscheins konfiguriert ist, wobei der andere Teil der Vielzahl der Verarbeitungsschritte anhand des ersten Bildes ausführt wird, und der Schritt der vorgezogenen Dekodierung (202) zwischen dem Schritt der Erfassung (201) des ersten Bildes und dem Schritt der Erfassung (203) des zweiten Bildes durchgeführt wird, und in welcher:
der Schritt (202) der vorgezogenen Dekodierung des Spielscheins so konfiguriert ist, dass anhand des ersten Bildes der Spielschein lokalisiert und der Spielscheintyp bestimmt wird, und
der Schritt (204) der Hauptdekodierung des Spielscheins so konfiguriert ist, dass er den Zustand des lokalisierten Feldes anhand der Subtraktion des ersten Bildes und des zweiten Bildes sowie des Ergebnisses des Schrittes der vorgezogenen Dekodierung (202), die am ersten Bild durchgeführt wurde, bestimmt,
die Lokalisierung des genannten mindestens einen Feldes des Spielscheins während des Schritts der vorgezogenen Dekodierung (202) oder während des Schritts der Hauptdekodierung (204) oder durch eine Kombination dieser beiden Schritte durchgeführt wird.

7. Dekodiervorrichtung (101) für einen Spielschein nach Anspruch 6, die ferner eine Vorrichtung (105) umfasst, die dazu geeignet ist, die Dekodierung des Spielscheins wiederzugeben, wobei die Verarbeitungseinheit ferner so konfiguriert ist, dass sie einen Schritt (205) zur Wiedergabe der Dekodierung des Spielscheins durchführt.

8. Dekodiervorrichtung (101) für einen Spielschein nach Anspruch 6 oder 7, wobei:
der Schritt (202) der vorgezogenen Dekodierung des Spielscheins so konfiguriert ist, dass das Feld des Spielscheins aus dem ersten Bild lokalisiert wird.

9. Dekodiervorrichtung (101) für einen Spielschein nach Anspruch 6 oder 7, wobei:
der Schritt (204) der Hauptdekodierung des Spielscheins so konfiguriert ist, dass das Feld des Spielscheins anhand der Subtraktion lokalisiert wird.

10. Dekodiervorrichtung (101) für einen Spielschein nach Anspruch 6 oder 7, wobei:
der Schritt (202) der vorgezogenen Dekodierung des Spielscheins so konfiguriert ist, dass er das Feld des Spielscheins aus dem ersten Bild lokalisiert, und
der Schritt (204) der Hauptdekodierung der Spielanzeige so konfiguriert ist, dass er die Qualität der Lokalisierung des Feldes ermittelt, und falls der ermittelte Wert unter einem vorgegebenen Schwellenwert liegt, eine neue Lokalisierung des Feldes bestimmt.

11. Computerprogrammprodukt, das Programmcodeanweisungen zur Ausführung der Schritte eines Verfahrens zur Dekodierung eines Spielscheins nach einem der Ansprüche 1 bis 5 umfasst, wenn dieses Verfahren von einem Prozessor ausgeführt wird.

## Claims

1. A method for decoding a game ticket, using a decoding device (101), said device (101) comprising a device for illuminating (103) the game ticket and a device for acquiring an image (102) of the game ticket, the decoding comprising a plurality of processes,
the plurality of processes comprising locating the game ticket and determining a type of the game ticket and locating at least one box of the game ticket and determining a state of the located box
the method comprising the following steps, implemented by a processing unit (104) of the decoding device (101):
- acquiring (201) a first image of the game ticket when the lighting device (103) is turned on; and
- acquiring (203) a second image of the game ticket when the lighting device (103) is turned off; and
- main decoding (204) of the game ticket, performing at least part of the plurality of processes based on a subtraction of the first image and the second image;
the method being **characterized in that** it further comprises a step of early decoding (202) of the game ticket, performing at least another part of the plurality of processes from the first image, said early decoding step (202) being performed between the acquisition step (201) of the first image and the acquisition step (203) of the second image,
and wherein:
the step (202) of early decoding of the game ticket is configured to locate the game ticket and determine the type of game ticket, based on the first image, and the main decoding step (204) of the game ticket is configured to determine the state of the located box, based on the subtraction of the first image and the second image and the result of the early decoding step (202) performed based on the first image, the location of said at least one box on the game ticket being determined during the early decoding step (202) or during the main decoding step (204) or by a combination of said two steps of early decoding (202) and main decoding (204).

2. Method for decoding a game ticket according to claim 1, further comprising a step (205) of restoring the decoding of the game ticket.

3. Method for decoding a game ticket according to claim 1 or 2, wherein:
the step (202) of early decoding the game ticket is configured to locate the box on the game ticket from the first image.

4. Method for decoding a game ticket according to claim 1 or 2, wherein:
the step (204) of main decoding the game ticket is configured to locate the box on the game ticket based on the subtraction.

5. A method for decoding a game ticket according to claim 1 or 2, wherein:
the step (202) of early decoding the game ticket is configured to locate the box on the game ticket based on the first image, and
the main decoding step (204) of the game ticket is configured to estimate a quality of the location of the box, and if this estimate is below a predetermined threshold, determine a new location for the box.

6. Device (101) for decoding a game ticket, the decoding comprising a plurality of processes,
the plurality of processes comprising locating the game ticket and determining a type of the game ticket and locating at least one box and determining a state of the located box
the device comprising
- an image acquisition device (102) and
- a device for illuminating the game ticket (103) and
- a processing unit (104) configured to perform the following steps:
- acquiring (201) a first image of the game ticket when the lighting device (103) is turned on; and
- acquiring (203) a second image of the game ticket when the lighting device (103) is turned off; and
- main decoding (204) of the game ticket, performing part of the plurality of processes based on a subtraction of the first image and the second image;
the device being **characterized in that** the processing unit (104) is further configured to perform an early decoding step (202) of the game ticket, performing the other part of the plurality of processes from the first image, the arly decoding step (202) being performed between the acquisition step (201) of the first image and the acquisition step (203) of the second image,
and wherein:
the step (202) of early decoding of the game ticket is configured to locate the game ticket and determine the type of game ticket from the first image, and
the main decoding step (204) of the game ticket is configured to determine the state of the located box, based on the subtraction of the first image and the second image and the result of the early decoding step (202) performed on the first image, the location of said at least one box on the game slip being determined during the early decoding step (202) or during the main decoding step (204) or by a combination of said two steps.

7. Device (101) for decoding a game ticket according to claim 6, further comprising a device (105) capable of restoring the decoding of the game ticket, the processing unit being further configured to perform a step (205) of restoring the decoding of the game ticket.

8. Device (101) for decoding a game ticket according to claim 6 or 7, in which: the step (202) of early decoding of the game ticket is configured to locate the box on the game ticket from the first image.

9. Device (101) for decoding a game ticket according to claim 6 or 7, wherein:
the step (204) of decoding the game ticket is configured to locate the box of the game ticket based on the subtraction.

10. A device (101) for decoding a game ticket according to claim 6 or 7, wherein:
the step (202) of early decoding the game ticket is configured to locate the box on the game ticket based on the first image, and
the main decoding step (204) is configured to estimate a quality of the location of the box, and if this estimate is below a predetermined threshold, determine a new location for the box.

11. Computer program product comprising program code instructions for executing the steps of a method for decoding a game ticket according to one of claims 1 to 5 when this method is executed by a processor.
